# EUROPÄISCHE PATENTSCHRIFT

(11) **EP 1 277 628 B1**
(45) Veröffentlichungstag und Bekanntmachung des Hinweises auf die Patenterteilung: **07.09.2005**
(21) Anmeldenummer: 02012916.9
(22) Anmeldetag: 01.07.2002
(51) Int. Cl.: B60R 21/20, B60R 21/26, B62D 27/02

(54) **Sicherheitseinrichtung für Kraftfahrzeuge**
Safety apparatus for automotive vehicles
Appareil de sécurité pour véhicules automobiles

(30) Priorität: 10.07.2001 DE 10133454
(43) Veröffentlichungstag der Anmeldung: 22.01.2003
(73) Patentinhaber: Benteler Automobiltechnik GmbH, 33104 Paderborn (DE); AUTOLIV DEVELOPMENT AB, 447 83 Vargarda (SE)
(72) Erfinder: Fischer, Jochem, 71672 Marbach/Neckar (DE); Klasfauseweh, Udo, Dr., 33334 Gütersloh (DE); Danner, Thomas, 85229 Mark Indersdorf (DE); Mayer, Josef, 85778 Haimhausen (DE); Rade, Rene, 25421 Pinneberg (DE); Tiefenthaler, Peter, 80689 München (DE)
(74) Vertreter: Ksoll, Peter

(56) Entgegenhaltungen:
- WO-A-99/30932
- DE-A- 4 304 919
- DE-A- 19 955 023
- US-A- 5 749 992
- US-A1- 2001 005 092

## Beschreibung

Die Erfindung betrifft eine Sicherheitseinrichtung für Kraftfahrzeuge nach dem Oberbegriff des Patentanspruchs 1.

Im Dachrahmenbereich eines Kraftfahrzeugs angeordnete Seitenairbag-Systeme werden im Crashfall aktiviert und schützen die Fahrzeuginsassen bei einem Seitenaufprall oder bei einem Roll-over vor Kollisionen mit der Fahrzeugtür und dem Dachrahmenbereich. Die derzeit bekannten Seitenairbag-Systeme werden als Komplettlösungen eingebaut. Die Versorgung des Seitenairbag-Systems mit Druckgas aus einer Druckgasquelle erfolgt durch lanzenartige Füllrohre, die von der Druckgasquelle zu dem Airbagsystem führen. Die Druckgasquelle ist in der Regel eine Gaspatrone, die häufig im Bereich der A-Säule, aber auch in anderen Bereichen des Fahrzeugs, wie beispielsweise unterhalb der C-Säule im Kofferraum angeordnet sein kann (DE 197 58 024 A1).

Die DE 199 55 023 A1 offenbart eine Vorrichtung mit Airbag in einem Kraftfahrzeug, bei welcher ein Gasgenerator über ein in die tragende Struktur des Fahrzeugs eingehendes rohrförmiges Element strömungsmäßig so in Verbindung steht, dass der Airbag aufgeblasen werden kann. Das rohrförmige Element kann dabei die A-Säule im Fahrzeug und auch wenigstens einen Ausschnitt von einem sich an diese anschließenden Dachträger bilden. Das rohrförmige Element kann aus miteinander zusammengefügten Teilen aufgebaut sein und insbesondere aus einem Rohrprofil bestehen. In dem Element ist ein Kanal vorgesehen, dessen Leckage nicht allzu groß sein darf. Wenn der Kanal aus miteinander - z.B. durch Schweißen - zusammengefügten Teilen gebildet wird, ist es wichtig, dass die dazu gehörenden Teile gut zusammengefügt sind. Es wird vorgeschlagen, zur Vermeidung von Leckagen Rohrprofile zu benutzen, bei welchen es von Vorteil ist, dass geringe Massen mit großer Festigkeit und Steifheit kombiniert werden können. Separate Rohrprofile ziehen allerdings grundsätzlich ein erhöhtes Gesamtgewicht des Kraftfahrzeugs nach sich.

Die DE 43 04 919 A1 betrifft eine Airbagvorrichtung im Dachrahmenbereich eines Fahrzeugs. Diese Vorrichtung besitzt einen Airbag und einen mit Öffnungen zur Gaszufuhr zum Airbag versehenen Behälter. Die Lehre der DE 43 04 919 A1 erschöpft sich im wesentlichen darin, dass der Behälter durch den Dachrahmenbereich gebildet ist. In der WO 99/30932 A wird ein Airbagsystem mit einem Gasgenerator beschrieben, der räumlich getrennt vom Gassack angeordnet ist und über eine Gaszuführung mit diesem verbunden ist. Wenigstens ein Airbag ist im Dachrahmenbereich der Kraftfahrzeugkarosserie angeordnet, wobei der Dachrahmen Fluid leitend mit einer entfernt vom Airbag angeordneten Druckgasquelle verbunden ist und mit Druckgas aus dieser Druckgasquelle befüllbar ist. Als Gasführung kann ein zumindest weitgehend gasdicht ausgeführter Teilbereich der Fahrzeugstruktur, wie z.B. der Dachholm, vorgesehen sein. Die Fluiddichtigkeit wird nach dem Verbinden der Blechprofile während des. Lackiervorgangs hergestellt, wobei der Fahrzeuglack abdichtend wirkt. Die Art der Verbindung der Blechbauteile spielt hinsichtlich der Fluiddichtigkeit keine Rolle, es wird lediglich eine hinreichende Fertigungsgenauigkeit gefordert, damit der Fahrzeuglack abdichtend wirken kann.

Die US 2001 005092 A1 offenbart eine Fahrerkabine, die einen Dachrahmen aufweist, der über unterschiedlichste Verbindungstechniken aus Einzelbauteilen zusammengesetzt werden kann. Der Dachrahmen kann z.B. auch geklebt sein.

Die WO 9930932 A offenbart eine Sicherheitseinrichtung nach dem Oberbegriff des Anspruchs 1.

Nachteilig an den bekannten Lösungen ist, dass für Füllrohre zusätzlicher Bauraum im Dachkantenbereich erforderlich ist. Weiterhin steigt mit zunehmender Länge der Füllrohre das Fahrzeuggewicht und damit letztlich auch der Kraftstoffverbrauch. Den Dachrahmen selbst zur Fluidleitung zu benutzen, setzt entweder besondere Dichtmittel oder ein nachträgliches Taulackieren voraus. Fluiddichtigkeit unmittelbar bei der Herstellung des Dachrahmenbereichs zu schaffen, ist schwierig.

Der Erfindung liegt ausgehend von dieser Problematik die Aufgabe zugrunde, eine Sicherheitseinrichtung für Kraftfahrzeuge zu schaffen, bei welcher die Fluid leitende Verbindung zwischen einer entfernt vom Airbag angeordneten Druckgasquelle und dem Airbag bauraum- und gewichtssparend ausgebildet ist, wobei Fluiddichtigkeit durch das Herstellungsverfahren der Fluid leitenden Verbindung erzeugt wird.

Die Erfindung löst die Aufgabe dadurch, dass bereits bestehende Hohlräume zur Fluidführung genutzt werden, so dass zusätzliche Lanzensysteme, wie sie im Stand der Technik verwendet werden, eingespart werden können. Als Verbindungsleitung zwischen der Druckgasquelle und dem Airbag ist ein Hohlraum im Dachrahmen vorgesehen. Da der Dachrahmen bei heutigen Kraftfahrzeugen ohnehin als Hohlraumstruktur konfiguriert ist, werden durch die Erfindung vorhandene Bauräume einer optimierten Nutzung zugeführt. Das Volumen des Hohlraums eines Dachrahmens ist in der Regel größer als das Volumen der bisher verwendeten Lanzensysteme. Daher ist es im Rahmen der Erfindung möglich, dass in dem Dachrahmen ein separater Hohlraum als Verbindungsleitung ausgebildet ist, der ein geringeres Volumen als der gesamte Dachrahmen hat. Der Vorteil ist, dass nicht der gesamte Dachrahmen mit Druckgas befüllt werden muss und gegebenenfalls kleinere und leichtere Druckgasquellen zum Einsatz kommen können.

Je nach konstruktiver Ausgestaltung des Kraftfahrzeuges, insbesondere des Dachrahmens, ist es natürlich auch möglich, den Dachrahmen selbst als Hohlraum zu konfigurieren, damit dieser als Verbindungsleitung zwischen der Druckgasquelle und dem Airbag fungiert.

Weitestgehende Fluiddichtigkeit des Hohlraums bzw. des Dachrahmens ist für die Nutzung als Verbindungsleitung funktionell von wesentlicher Bedeutung. Daher ist es vorgesehen, dass bei einem aus Blechprofilen gebildeten Dachrahmen bzw. Hohlraum diese fluiddicht miteinander verbunden sind. Bei der Erfindung wird Fluiddichtigkeit dadurch erreicht, dass die entsprechenden Blechprofile miteinander verklebt sind.

Üblicherweise ist der Dachrahmen schweißtechnisch mit den A-, B- oder C/D-Säulen verbunden, wobei zwischen den Säulen und dem Dachrahmen Öffnungen vorhanden sind. Damit der Dachrahmen oder ein in dem Dachrahmen vorhandener Hohlraum als Verbindungsleitung fungieren kann, ist nach Anspruch 2 beabsichtigt, die zu den vorgenannten Säulen vorhandenen Öffnungen zu verschließen.

Der Dachrahmenbereich hat aufgrund der hohen Anforderungen an die Steifigkeit einer Kraftfahrzeugkarosserie einen relativ großen Querschnitt, weshalb es prinzipiell möglich ist, diesen Querschnitt für die Aufnahme einer Druckgasquelle vorzusehen. Je nach Größe des in dem Dachrahmen ausgebildeten Hohlraums kann die Druckgasquelle unmittelbar in dem Hohlraum (Anspruch 3) oder in dem Dachrahmen (Anspruch 4) angeordnet sein. Selbstverständlich kann die Druckgasquelle auch in bekannter Weise in anderen Bereichen des Kraftfahrzeugs positioniert sein, wobei für die Zuführung von Druckgas zu dem Airbagsystem durch die Verwendung von Hohlräumen des Dachrahmens nur noch relativ kurze Lanzensysteme erforderlich sind, um die Druckgasquelle mit den Hohlräumen zu verbinden.

Ein weiterer Vorteil der erfindungsgemäßen Sicherheitseinrichtung ist, dass bei Nutzung des Dachrahmens als Verbindungsleitung im Zeitraum des Aufpralls ein erhöhter Innendruck in dem Dachrahmen vorhanden ist. Dieser Innendruck führt zu einer kurzfristigen Versteifung der Hohlraumstruktur, insbesondere durch den explosionsartig einsetzenden Druckaufbau.

Der Airbag wird bei der erfindungsgemäßen Sicherheitseinrichtung derart an den Hohlraum bzw. die Verbindungsleitung angebunden, dass eine funktionssichere Befüllung des Airbags möglich ist. Hierfür zweigen von der Verbindungsleitung seitlich angeordnete Abströmöffnungen ab, durch die das Druckgas dem Airbag oder einzelnen Airbagmodulen zuführbar ist. Zur Vermeidung, dass das Druckgas aufgrund der hohen Gasgeschwindigkeit im wesentlichen nur entlang der Hauptströmungsrichtung durch die Verbindungsleitung fließt, können im Inneren der Verbindungsleitung Führungsflächen angeordnet sein, die einen Teil des Gasstroms abzweigen und dem Airbag zuführen. Es ist auch denkbar, dass die Verbindungsleitungen in Hauptstromrichtung des Druckgases gesehen hinter der Abströmöffnung Querschnittsverengungen besitzen, die zu einem Druckstau und damit zu einem Austreten des Druckgases an den Abströmöffnungen führen.

Die Erfindung ist nachfolgend anhand eines in einer schematischen Zeichnung dargestellten Ausführungbeispiels näher erläutert.

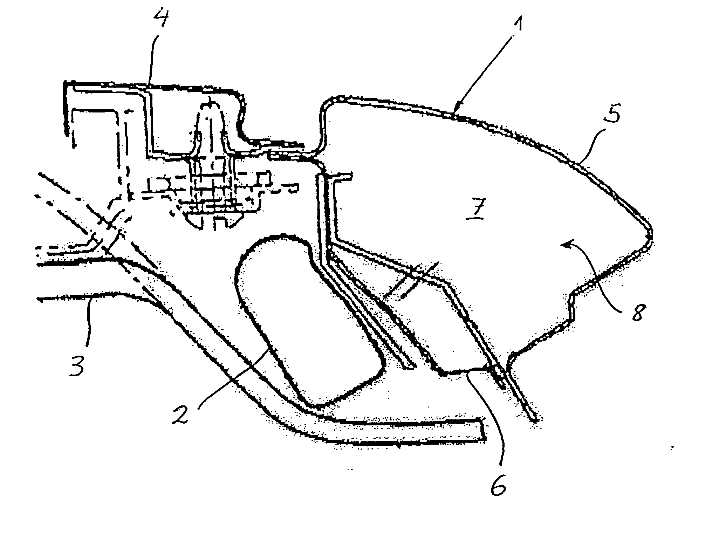

Die Figur zeigt im vertikalen Querschnitt den Dachrahmenbereich der Fahrzeugkarosserie eines Kraftfahrzeugs. Der Dachrahmenbereich besteht aus dem Dachrahmen 1, einem auf der Fahrzeuginnenseite des Dachrahmens 1 angeordneten Airbag 2 sowie aus der Innenverkleidung 3 und Baugruppen des Fahrzeugdachs 4 auf die nicht näher eingegangen werden soll.

Der Dachrahmen 1 ist aus einem äußeren Blechprofil 5 und einem inneren Blechprofil 6 gebildet. Die Blechprofile 5, 6 sind fluiddicht miteinander verbunden, insbesondere miteinander verklebt. Diese Blechprofile 5, 6 umschließen einen Hohlraum 7, der sich in Längrichtung des Kraftfahrzeugs, d.h. in die Bildebene hinein und aus dieser heraus erstreckt. Der Hohlraum 7 ist dabei als Verbindungsleitung 8 zwischen einer nicht näher dargestellten Druckgasquelle und dem Airbag 2 ausgestaltet. Im Falle des Auslösens des Airbags 2 gibt die Druckgasquelle unter hohem Druck und mit hohen Gasgeschwindigkeiten Druckgas in den Hohlraum 7 des Dachrahmens 1 frei, wobei dieser als Verbindungsleitung 8 das Druckgas über nicht näher dargestellte Zuführungen dem Airbag 2 zuführt.

### Bezugszeichenaufstellung:

- 1 -: Dachrahmen
- 2 -: Airbag
- 3 -: Innenverkleidung
- 4 -: Fahrzeugdach
- 5 -: äußeres Blechprofil von 1
- 6 -: inneres Blechprofil von 1
- 7 -: Hohlraum
- 8 -: Verbindungsleitung

## Patentansprüche

1. Sicherheitseinrichtung für Kraftfahrzeuge, umfassend wenigstens einen im Dachrahmenbereich der Fahrzeugkarosserie angeordneten Airbag (2), welcher fluidleitend mit einer entfernt vom Airbag (2) angeordneten Druckgasquelle verbunden ist und mit Druckgas aus der Druckgasquelle befüllbar ist, wobei ein Hohlraum (7) des Dachrahmens (1) oder der Dachrahmen (1) selbst als Verbindungsleitung (8) zwischen der Druckgasquelle und dem Airbag (2) ausgestaltet ist, **dadurch gekennzeichnet, dass** der Dachrahmen (1) und/oder der Hohlraum (7) aus fluiddicht miteinander verbundenen Blechprofilen (5, 6) gebildet ist, wobei die Blechprofile (5, 6) miteinander verklebt sind.

2. Sicherheitseinrichtung nach Anspruch 1, **dadurch gekennzeichnet, dass** sich der Hohlraum (7) von der A-Säule bis zur C/D-Säule erstreckt, wobei Öffnungen zu den A-, B-, C/D-Säulen verschlossen sind.

3. Sicherheitseinrichtung nach Anspruch 1 oder 2, **dadurch gekenn- zeichnet,** dass die Druckgasquelle in dem Hohlraum (7) angeordnet ist.

4. Sicherheitseinrichtung nach einem der Ansprüche 1 bis 3, **dadurch gekennzeichnet , dass** die Druckgasquelle in dem Dachrahmen (1) angeordnet ist.

## Claims

1. Safety device for motor vehicles, comprising at least one airbag (2) which is disposed in the roof frame region of the vehicle body, is fluidly connected to a pressure gas source disposed remote from the airbag (2) and can be filled with pressure gas from the pressure gas source, wherein a hollow space (7) of the roof frame (1) or the roof frame (1) itself is formed as a connection line (8) between the pressure gas source and the airbag (2), **characterised in that** the roof frame (1) and/or the hollow space (7) is formed from metal sheet profiles (5, 6) which are connected together in a fluid-tight manner, wherein the metal sheet profiles (5, 6) are adhered to one another.

2. Safety device as claimed in claim 1, **characterised in that** the hollow space (7) extends from the A-pillar to the C/D-pillar, wherein openings to the A-, B-, C/D-pillars are closed off.

3. Safety device as claimed in claim 1 or 2, **characterised in that** the pressure gas source is disposed in the hollow space (7).

4. Safety device as claimed in any one of claims 1 to 3, **characterised in that** the pressure gas source is disposed in the roof frame (1).

## Revendications

1. Dispositif de sécurité pour véhicules automobiles, comprenant au moins un coussin d'air (2) disposé dans la zone du cadre du toit de la carrosserie automobile, qui est raccordé en communication de fluide avec une source de gaz sous pression éloignée du coussin d'air (2) et pouvant être rempli de gaz sous pression en provenance de cette source de gaz sous pression, dans lequel une chambre creuse (7) du ou des cadre(s) de toit (1) est elle-même conçue comme conduite de raccordement (8) entre la source de gaz sous pression et le coussin d'air (2), **caractérisé en ce que** le cadre de toit (1) et/ou la chambre creuse (7) sont constitués de tôles profilées (5,6) raccordées entre elles de façon étanche aux fluides, dans lequel les tôles profilées (5,6) sont collées entre elles.

2. Dispositif de sécurité selon la revendication 1, **caractérisé en ce que** la chambre creuse (7) s'étend de la colonne A à la colonne C/D, dans lequel les ouvertures sur les colonnes A, B, C/D sont obturées.

3. Dispositif de sécurité selon la revendication 1 ou 2, **caractérisé en ce que** la source de gaz sous pression est disposée dans la chambre creuse (7).

4. Dispositif de sécurité selon l'une des revendications 1 à 3, **caractérisé en ce que** la source de gaz sous pression est disposée dans le cadre de toit (1).
